# EUROPÄISCHE PATENTSCHRIFT

(11) **EP 1 529 428 B1**
(45) Veröffentlichungstag und Bekanntmachung des Hinweises auf die Patenterteilung: **21.11.2012**
(21) Anmeldenummer: 04105384.4
(22) Anmeldetag: 28.10.2004
(51) Int. Cl.: A01B 69/00, A01D 41/127

(54) **Verfahren und Lenksystem zum selbstständigen Lenken einer landwirtschaftlichen Maschine**
Method and system for automatic steering of an agricultural vehicle
Procédé et système pour la direction automatique d'une machine agricole

(30) Priorität: 06.11.2003 DE 10351861
(43) Veröffentlichungstag der Anmeldung: 11.05.2005
(73) Patentinhaber: DEERE & COMPANY, Moline, Illinois 61265-8098 (US)
(72) Erfinder: Hofer, Jürgen, 66501, Grossbundenbach (DE); Bohner, Manfred, 76228, Karlsruhe (DE); Freichel, Thorsten, 66292, Riegelsberg (DE)
(74) Vertreter: Holst, Sönke

(56) Entgegenhaltungen:
- EP-A- 0 801 885
- WO-A-96/17279
- US-A1- 2002 106 108
- US-B1- 6 278 918
- US-B1- 6 721 453

## Beschreibung

Die Erfindung betrifft ein Verfahren zum selbsttätigen Lenken einer landwirtschaftlichen Maschine auf einem Feld entlang einer zu bearbeitenden Fläche, sowie ein entsprechendes Lenksystem.

In den vergangenen Jahren wurden viele Funktionen von landwirtschaftlichen Fahrzeugen, die zuvor von Hand durch einen Bediener gesteuert wurden, automatisiert. Um dem Bediener die Arbeit zu erleichtern, wurden beispielsweise verschiedene Lenksysteme vorgeschlagen, die das Fahrzeug selbsttätig über ein Feld lenken. Sie können dem Bediener die Arbeit erleichtern und ihm ermöglichen, sich auf andere, wichtige Teile seiner Arbeit zu konzentrieren, wie einer Kontrolle der Auslastung der Arbeitseinrichtungen des Fahrzeugs. Es könnte zukünftig auch denkbar sein, derartige Fahrzeuge ohne Fahrer über ein Feld fahren zu lassen.

Es wurden automatische Lenksysteme beschrieben, die auf unterschiedlichen Prinzipien beruhen. Berührungslos arbeitende Systeme lassen sich unterteilen in auf eine Entfernungsmessung basierende Systeme, die versuchen, die Höhendifferenz zwischen geschnittenem und ungeschnittenen Erntegut zu erfassen, und in auf einer Abbildung basierende Systeme, die versuchen, Unterschiede im Aussehen zwischen dem Erntegut auf der geschnittenen und der ungeschnittenen Seite der Erntegutkante bzw. Pflanzen und dem Erdboden zu erfassen.

Beispiele für auf eine Entfernungsmessung basierende Systeme finden sich in der EP 0 887 660 A und EP 1 271 139 A.

In der EP 0 887 660 A wird eine auf den Boden vor einer Erntemaschine gerichtete Laserentfernungsmessvorrichtung über einen Winkelbereich verschwenkt. Anhand ihrer Ausrichtung und Position wird die zu dem Schwenkwinkel korrespondierende Lage des Punktes ermittelt, an dem der Laserstrahl reflektiert wurde. Auf diese Weise wird ein Höhenprofil des Bodens bestimmt, der es ermöglicht ein Schwad oder eine Erntegutkante an der Grenze zwischen einem abgeernteten Teil eines Getreidefelds und dem noch nicht abgeernteten Teil zu erkennen und daraus ein Lenksignal zu generieren.

Die EP 1 271 139 A schlägt bei einer derartigen Laserentfernungsmessvorrichtung zusätzlich vor, anhand der Intensität der zurückgeworfenen Strahlung die Menge des aufzunehmenden Ernteguts zu bestimmen.

Ein Nachteil der auf einer Entfernungsmessung basierenden Systeme liegt darin, dass eine relativ kostspielige Entfernungsmesseinrichtung mit einem Laser und einer Elektronik zur Laufzeiterfassung benötigt wird.

Beispiele für auf einer Abbildung basierende Systeme, die mit einer auf das Feld gerichteten Kamera und einer elektronischen Bildverarbeitung arbeiten, sind in der DE 35 07 570 A, EP 0 801 885 A, WO 98/46065 A, WO 96/17279 A, JP 01 319 878 A, JP 03 012 713 A, US 6 278 918 B, US 6 285 930 B, US 6 385 515 B, US 6 490 539 B und US 2002/106108 A zu finden.

Die DE 35 07 570 offenbart ein automatisches Lenksystem für ein landwirtschaftliches Fahrzeug, das entlang eines oder über ein Feld mit in Reihen angebauten Pflanzen fahren soll. Das System leitet die Orientierung der Pflanzenreihen aus einem anfänglichen Bild ab. Dann wird das Bild entlang Linien abgerastert, die sich parallel zur abgeleiteten Orientierung erstrecken und die mittleren Grauwerte je Zeile werden in einem Speicher abgelegt. Während der Fahrt über das Feld wird das Feld entlang derselben Linien abgerastert. Die Ergebnisse des Abrasterns jeder Linie werden mit den Werten im Speicher verglichen und durch geeignete Lenksignale werden die Referenzwerte aufrechterhalten.

In der EP 0 801 885 A wird eine Erntemaschine mit einer Kamera beschrieben, deren Bildsignal digitalisiert und einer Bildverarbeitung unterzogen wird. Dabei werden die Zeilen jeweils auf die Position einer Schrittfunktion, an der sich der Grauwert stufenweise ändert, hin untersucht. In den einzelnen Zeilen werden die Pixelpositionen mit der jeweils höchsten Wahrscheinlichkeit für die Schrittfunktion bestimmt. Diese Positionen werden zur Erzeugung eines Lenksignals herangezogen.

In der WO 98/46065 A wird außerdem anhand der in den einzelnen Zeilen enthaltenen Information erkannt, ob sie eine Erntegutgrenze enthalten. Anhand der Informationen aller Zeilen wird festgestellt, in welcher Zeile das abzuerntende Feld endet.

Die WO 96/17279 A schlägt vor, eine Begrenzung (z. B.
Parallelogramm) über ein mittels einer Kamera aufgenommenes Bild zu legen und darin liegende Objekte mit einer Helligkeit, die über einem Schwellenwert liegt, zu identifizieren. Die Objekte werden einer Regressionsanalyse unterzogen, um ihren Versatz zu einer zuvor identifizierten Reihe zu bestimmen, der wiederum zur Erzeugung eines Lenksignals dient.

Die JP 01 319 878 A bezieht sich auf ein Lenksystem, bei dem Flächen spezifischer Farbe in einem mittels einer Kamera aufgenommenen Bild miteinander verbunden werden, um eine gerade Linie zu definieren. Diese Linie wird als Pflanzenreihe angesehen und dient zur Erzeugung des Lenksignals.

In der JP 03 012 713 A wird ein selbsttätiges Lenksystem für einen Traktor vorgeschlagen, bei dem ein Fenster eines aufgenommenen Bilds definiert wird. In diesem Fenster wird eine virtuelle Linie definiert, auf der die Pflanzen angeordnet sind. Dabei wird das Bild mit einer virtuellen Pflanzenreihe verglichen, um ein Lenksignal zu erzeugen.

Die US 6 278 918 B schlägt vor, das aufgenommene Bild in zwei oder vier Bereiche zu unterteilen. In den Bereichen wird ein Ort und eine Richtung einer Pflanzenreihe bestimmt. Die besser erkennbare Pflanzenreihe wird zur Erzeugung des Lenksignals herangezogen. Die Entscheidung, ob ein Pixel eine Pflanze wiedergibt oder nicht, erfolgt durch so genanntes K-means clustering, bei dem ein Histogramm der Pixelwerte erzeugt wird, in welchem die x-Achse die Grauwertniveaus und die y-Achse die Anzahl der Pixel mit den jeweiligen Grauwerten darstellt. Die Pixel, die wahrscheinlicher die Pflanzen darstellen, erscheinen daher an der rechten Seite des Histogramms. Der Algorithmus zerteilt das aus dem Bild der Kamera erzeugte Histogramm in eine vorbestimmte Anzahl K von Klassen, deren Intervalle jeweils gleich beabstandet sind. Die Daten werden rekursiv verarbeitet, um den durchschnittlichen Grauwert für die Klasse zu finden. Die Grenzen zwischen den Klassen werden basierend auf einer vorbestimmten Metrik oder der Minimierung einer Kostenfunktion rekursiv verschoben, bis sich die Zentren der Klassen um weniger als eine gegebene Toleranz verschieben. Danach wird eine Schwelle zur Unterscheidung zwischen Pflanzen und dem Erdboden an den Anfang der Klasse K oder einer anderen Klasse gesetzt. Die Klassifizierung kann auch durch andere Clustering-Algorithmen erfolgen, wie Aufteilungsverfahren, selbstorganisierende Karten und neuronale Logik oder Fuzzy-Logik. Die US 6 285 930 B, US 6 385 515 B und US 6 490 539 B beziehen sich ebenfalls auf dieses System.

In der US 2002/106108 A wird ein anderes, auf einer Kamera und einem Bildverarbeitungssystem beruhendes Lenksystem beschrieben. Anhand des aufgenommenen Bildes werden die Neigung und der Schnittpunkt der Kante stehenden Gutes mit dem Bildrand berechnet.

Bei den beschriebenen, auf einer Abbildung basierenden Systemen wird anhand der Helligkeit und/oder der Farbe der einzelnen Pixel unterschieden, ob sie eine Pflanze repräsentieren oder nicht. Die identifizierten Pflanzen werden bei einigen dieser Systeme durch eine virtuelle Linie verbunden, die zur Erzeugung eines Lenksignals dient. Es ist allerdings in manchen Fällen, bei denen eine selbsttätige Lenkung einer landwirtschaftlichen Maschine wünschenswert ist, nicht einfach oder sogar fast unmöglich, anhand der Farbe bzw. Helligkeit zu erkennen, ob ein Pixel zu einer Linie gehört, der gefolgt werden soll oder nicht. Ein typisches Beispiel ist ein Schwad gemähten Grases oder auf einem abgeernteten Getreidefeld liegenden Strohs. Das Schwad besteht aus demselben Material wie die auf dem Feld stehen gebliebenen Stoppeln und hat deshalb in vielen Fällen mehr oder weniger dieselbe Helligkeit und Farbe. Die beschriebenen abbildenden Systeme sind hier nur schwer einsetzbar. Andere beschriebene Systeme erkennen Pflanzen auf einem Feld und orientieren sich an den durch sie beschriebenen Reihen, um beispielsweise Chemikalien auszubringen. Falls keine Pflanzen vorhanden sind, können diese Systeme nicht eingesetzt werden.

In der Beschreibungseinleitung der EP 0 801 885 A (Seite 3, erster Absatz) wird ein mögliches Verfahren erwähnt, das einen lokalen zweidimensionalen Fouriertransformationsoperator als Basis für eine texturbasierte Segmentierung verwendet, um ein räumliches Frequenzband mit einem wesentlichen Unterschied zwischen abgeschnittenen Pflanzen und stehenden Pflanzen festzustellen. Es wird ausgeführt, dass dieses Verfahren bei anfänglichen Tests keinen klaren Hinweis auf einen derartigen Unterschied zeigte. Es wurde deshalb verworfen.

Das der Erfindung zu Grunde liegende Problem wird darin gesehen, ein Verfahren zum selbsttätigen Lenken einer landwirtschaftlichen Maschine und ein entsprechendes Lenksystem bereitzustellen, das zuverlässig arbeitet und kostengünstig realisierbar ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird ein Verfahren und eine Vorrichtung zum selbsttätigen Lenken einer landwirtschaftlichen Maschine entlang einer zu bearbeitenden Fläche auf einem Feld vorgeschlagen. Die Maschine wird mit einer Kamera versehen, die auf den Bereich vor der Maschine einschließlich der zu bearbeitenden Fläche gerichtet ist. Die Kamera liefert in bestimmten Zeitabständen zweidimensionale Bilder der zu bearbeitenden Fläche und der daneben befindlichen Bereiche des Felds. Aus dem Bildsignal der Kamera wird eine Pixeldatei erzeugt, die mittels einer elektronischen Bildverarbeitung weiterverarbeitet wird, um ein Lenksignal zu erzeugen und die Maschine selbsttätig entlang der zu bearbeitenden Fläche zu führen. Ein Vorzug der Verwendung eines abbildenden Systems liegt gegenüber auf einer Entfernungsmessung basierenden Systemen in den geringeren Kosten.

Die Erfindung schlägt vor, aus der Pixeldatei eine Texturinformation hinsichtlich der Textur der Umgebung der einzelnen ausgewerteten Pixel abzuleiten. Es wird eine Information generiert, die eine Information darüber enthält, wie die Struktur des Bildes in der Nachbarschaft des Pixels aussieht, d. h. ob sie beispielsweise gleichmäßig oder ungleichmäßig ist oder in welcher Richtung dort vorhandene Einzelheiten, wie z. B. Ernteguthalme oder Erdschollen, orientiert sind. Blickt die Kamera beispielsweise auf ein abgemähtes Feld mit einem Schwad, zeigt das Feld im Wesentlichen kurze, vertikale Halme und das Schwad längere Halme mit unterschiedlichen Orientierungen. Analog ist die zu bearbeitende Fläche bei der Bodenbearbeitung von den benachbarten Feldbereichen unterschiedlich, da sie beispielsweise nach dem Pflügen oder Grubbern mehr oder weniger große Erdschollen und eine unebenere Oberfläche zeigt als vorher. Diese Texturinformation dient als Grundlage einer Klassifikation, ob das jeweilige Pixel der zu bearbeitenden Fläche zugeordnet werden soll oder nicht (binäre Entscheidung). Da nicht wie im Stand der Technik nur die Helligkeit des Pixels, sondern darüber hinaus gehende Informationen der Klassifikation zu Grunde gelegt werden, steht sie auf einer relativ sicheren Grundlage. Die Lage der zu bearbeitenden Fläche kann somit unproblematisch erkannt werden. Anhand der bekannten Lage der die zu bearbeitenden Fläche (bzw. der nicht mehr und/oder noch nicht zu bearbeitenden Fläche) repräsentierenden Pixel wird ein Lenksignal erzeugt, das den Lenkmitteln der Maschine zugeführt wird.

Die Texturinformation kann insbesondere durch eine richtungsunabhängige oder richtungsabhängige Texturanalyse gewonnen werden. Bei einer richtungsunabhängigen Texturanalyse werden Informationen hinsichtlich der Nachbarn des Pixels in allen Richtungen berücksichtigt. Bei einer richtungsabhängigen Texturanalyse werden nur die Nachbarn in bestimmten Richtungen evaluiert. Die richtungsabhängige Texturanalyse ist besonders sinnvoll, wenn im Bild Merkmale bevorzugt in gewissen Richtungen auftreten. Die richtungsabhängige oder richtungsunabhängige Texturanalyse kann zum Beispiel mittels einer Grauwertabhängigkeitsanalyse durchgeführt werden.

Alternativ oder zusätzlich kann die Textur mittels einer Multispektralanalyse untersucht werden. Hierbei wird eine Kamera verwendet, die zumindest zwei unterschiedliche Lichtwellenlängen erfassen kann. Bei den unterschiedlichen Wellenlängen kann sich auch die Textur in der Nachbarschaft der Pixel unterscheiden, so dass man der Entscheidung, ob die einzelnen Pixel jeweils die zu bearbeitende Fläche repräsentieren oder nicht, eine zusätzliche Information zu Grunde legen kann. Als Multispektralanalyse kann eine Farbanalyse, insbesondere eine RGB-Analyse vorgesehen werden.

Die Entscheidung, ob die einzelnen Pixel jeweils die zu bearbeitende Fläche repräsentieren oder nicht, wird durch einen so genannten Klassifikator getroffen. Ein geeigneter Klassifikator ist ein neuronales Netzwerk. Der Klassifikator wird vorzugsweise vor Arbeitsbeginn mittels eines ihm zugeführten Bildes und einer Information über Bereiche des Bildes, die die zu bearbeitende Fläche zeigen, und Bereiche, die eine nicht zu bearbeitende Fläche zeigen, einem Lernvorgang unterzogen. Der Lernvorgang kann bei der Herstellung in der Fabrik oder vor Beginn der Arbeit auf einem Feld erfolgen.

Das erfindungsgemäße Lenksystem eignet sich insbesondere zur Führung der Erntemaschine entlang als Schwad bereitgestellten Ernteguts, da es eine gute Unterscheidung zwischen den Halmen im Schwad und auf dem Feld ermöglicht. Derartige Erntemaschinen sind beispielsweise Feldhäcksler mit einer Pick-Up als Erntegutaufnahmevorrichtung, selbstfahrende oder von einem Traktor gezogene Ballenpressen und Traktoren mit Ladewagen. Das Schwad wird erkannt und die Erntemaschine wird an ihm entlanggeführt. Das beschriebene Lenksystem kann aber auch an Erntemaschinen verwendet werden, die entlang einer Erntegutkante bewegt werden, wie Mähdrescher, Feldhäcksler mit Maiserntegeräten oder Mähmaschinen, da das Lenksystem in der Lage ist, die langen, stehenden Halme mit den Ähren an der Oberseite von den Stoppeln auf dem abgeernteten Feld zu unterscheiden. Hier wird die Erntemaschine mit der äußeren Kante der Erntegutaufnahmeeinrichtung an der Kante des Ernteguts entlanggeleitet.

Anzumerken ist, dass das von der Kamera erzeugte Bild auch eine Information über die Menge bzw. Rate des aufzunehmenden Ernteguts enthält. Diese Information kann aus den Konturen des Ernteguts und/oder seiner Farbe abgeleitet werden. Das Lenksystem kann somit die zu erwartende Rate berechnen und einer selbsttätigen Steuerung der Fahrgeschwindigkeit zu Grunde legen.

Ein anderer möglicher Anwendungsfall des erfindungsgemäßen Lenksystems ist die beispielsweise mittels eines Pflugs, eines Grubbers, einer Egge, einer Walze oder dgl. durchgeführte Bodenbearbeitung, oder das Säen. Wie bereits oben erwähnt, unterscheidet sich die Textur des Bodens nach der Bearbeitung von der zuvor vorliegenden Textur. Das Lenksystem erkennt die Grenze zwischen dem bereits bearbeiteten Teil des Felds und dem noch unbearbeiteten Teil anhand der unterschiedlichen Texturen und leitet die landwirtschaftliche Maschine an ihr in einem optimalen Abstand entlang, so dass die äußere Grenze ihres Arbeitswerkzeugs an der Grenze zwischen dem bearbeiteten Teil des Felds und dem unbearbeiteten Teil entlanggeführt wird.

In den Zeichnungen sind zwei nachfolgend näher beschriebene Ausführungsbeispiele der Erfindung dargestellt. Es zeigt:
- Fig. 1: einen Feldhäcksler mit einem erfindungsgemäßen selbsttätigen Lenksystem in Seitenansicht und in schematischer Darstellung,
- Fig. 2: eine schematische seitliche Ansicht eines Traktors mit einem erfindungsgemäßen selbsttätigen Lenksystem und einer von ihm gezogenen Ballenpresse,
- Fig. 3: ein Blockdiagramm des Lenksystems,
- Fig. 4: ein Beispiel für ein von der Kamera aufgenommenes Bild,
- Fig. 5: ein Flussdiagramm, nach dem der Prozessor des Lenksystems arbeitet,
- Fig. 6: ein Schema eines für die Entscheidung, ob ein Pixel zum Feld oder zum Schwad gehört, verwendbaren neuronalen Netzwerks,
- Fig. 7: den Betrieb des neuronalen Netzwerks aus Figur 6 in einer Lernphase,
- Fig. 8: den Betrieb des neuronalen Netzwerks aus Figur 6 in einer Analysephase,
- Fig. 9: ein auf das Bild aus Figur 4 zurückgehendes Ergebnisbild einer richtungsunabhängigen Grauwertanalyse,
- Fig. 10: ein auf das Bild aus Figur 4 zurückgehendes Ergebnisbild einer richtungsabhängigen Grauwertanalyse,
- Fig. 11: ein aus der Entscheidung, ob die Pixel zum Schwad oder zum Feld gehören, hervorgehendes Bild, das auf das Bild aus Figur 9 zurückgeht,
- Fig. 12: das Bild aus Figur 11 nach Entfernung aller Flächen, die kleiner als 450 Pixel sind,
- Fig. 13: die verbleibende, größte Fläche aus dem Bild in Fig. 12, und
- Fig. 14: das Endergebnis der Bearbeitung des Bilds aus Fig. 13 mit eingezeichneten Trägheitsachsen.

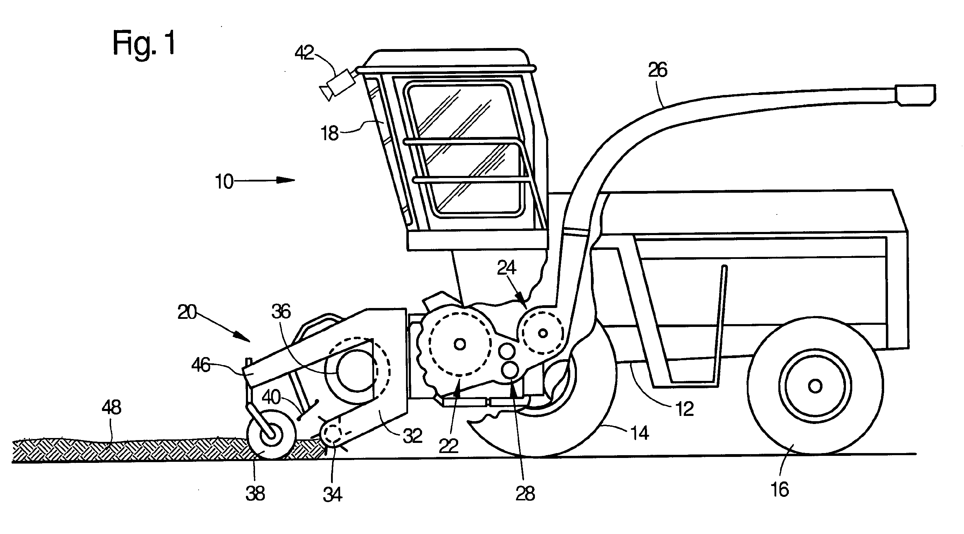

In der Figur 1 ist eine Erntemaschine in der Art eines selbstfahrenden Feldhäckslers 10 dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Gras oder dergleichen wird über nicht eingezeichnete Zuführwalzen, die innerhalb eines Einzugsgehäuses an der Frontseite des Feldhäckslers 10 angeordnet sind, einer Häckseltrommel 22 zugeführt, die es in kleine Stücke häckselt und es einer Fördervorrichtung 24 aufgibt. Das Gut verlässt den Feldhäcksler 10 zu einem nebenher fahrenden Anhänger über einen um eine etwa vertikale Achse drehbaren und in der Neigung verstellbaren Austragschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Die Erntegutaufnahmevorrichtung 20 ist in diesem Ausführungsbeispiel als sogenannte Pick-up ausgebildet. Die Erntegutaufnahmevorrichtung 20 baut sich auf einem Gestell 32 auf und stützt sich über beidseitig angebrachte Stützräder 38, die über je einen Träger 46 am Gestell 32 befestigt sind, auf dem Erdboden ab. Die Aufgabe der Erntegutaufnahmevorrichtung 20 besteht darin, auf dem Boden eines Felds in einem Schwad 48 abgelegtes Erntegut aufzunehmen und es dem Feldhäcksler 10 zur weiteren Bearbeitung zuzuführen. Hierzu wird die Erntegutaufnahmeeinrichtung 20 während des Erntebetriebes mit geringem Abstand zum Erdboden über das Feld bewegt, während sie zum Transport auf einer Strasse oder auf Wegen angehoben wird. Zu der Erntegutaufnahmevorrichtung 20 gehört eine Fördervorrichtung 36 in Form einer Förderschnecke, die das aufgenommene Gut von den Seiten der Erntegutaufnahmevorrichtung 20 zu einer in der Mitte gelegenen, nicht gezeigten Abgabeöffnung fördert, hinter der die Zuführwalzen folgen. Die Erntegutvorrichtung 20 weist auch einen, wie auch die Fördervorrichtung 36, rotativ angetriebenen Aufnehmer 34 auf, der unterhalb der Fördervorrichtung 36 angeordnet ist und mit seinen Förderzinken das Gut vom Erdboden anhebt, um es der Fördervorrichtung 36 zu übergeben. Außerdem ist ein Niederhalter 40 in Form eines über dem Aufnehmer 34 angeordneten Bleches am Gestell 32 befestigt.

Der Feldhäcksler 10 ist an der Oberseite der in Fahrtrichtung vorlaufenden Seite der Fahrerkabine 18 mit einer Kamera 42 ausgestattet. Das Objektiv der Kamera 42 ist schräg nach vorn und unten auf das Schwad 48 gerichtet. Die Kamera 42 befindet sich auf der Längsmittelachse des Feldhäckslers 10. Die Kamera 42 bildet mit einer elektronischen Steuerung ein weiter unten beschriebenes selbsttätiges Lenksystem, das den Feldhäcksler 10 automatisch entlang des Schwads 48 führt, um die Arbeit des Bedieners in der Fahrerkabine 18 zu vereinfachen.

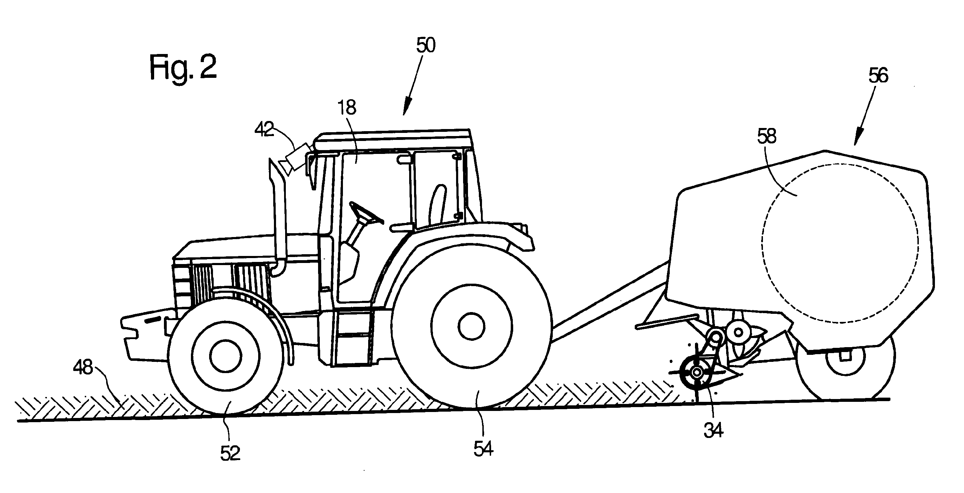

Zunächst wird jedoch anhand der Figur 2 eine andere Einsatzmöglichkeit des selbsttätigen Lenksystems beschrieben. Hier ist die Kamera 42 an der Oberseite der in Fahrtrichtung vorlaufenden Seite der Fahrerkabine 18 eines Traktors 50 angebracht. Sie befindet sich auf der Längsmittelebene des Traktors und ihr Objektiv ist ebenfalls nach vorn und unten auf das Schwad 48 gerichtet. Der Traktor 50 weist vordere lenkbare Räder und rückwärtige angetriebene Räder 54 auf. Er zieht hinter sich eine Ballenpresse 56 her, die das Erntegut aus dem Schwad 48 mittels eines Aufnehmers 34 vom Feld aufnimmt und zu Ballen 58 formt. Anstelle der dargestellten Rundballenpresse kann die Ballenpresse 56 auch eine Rechteckballenpresse sein. Sie könnte auch selbstfahrend ausgeführt sein. Die Erfindung kann auch an einem zur Bodenbearbeitung dienenden Traktor 50 eingesetzt werden.

Der Feldhäcksler 10 und der Traktor 50 sind an ihren Vorderseiten mit Beleuchtungseinrichtungen ausgestattet, die es ermöglichen, das Schwad 48 auszuleuchten, falls das vorhandene Licht nicht ausreicht.

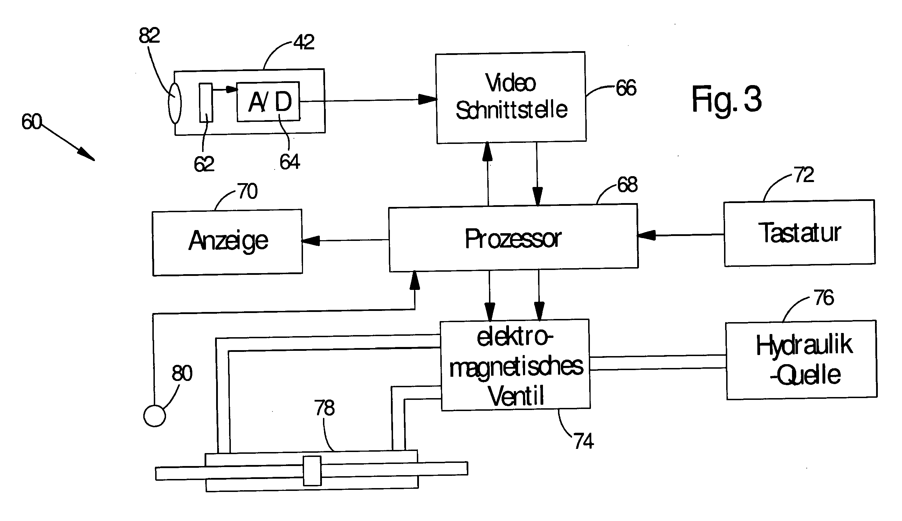

In der Figur 3 ist das Lenksystem 60 des Feldhäckslers 10 aus Figur 1 bzw. des Traktors 50 aus Figur 2 schematisch dargestellt. Die Kamera 42 weist einen Bildsensor 62 insbesondere in Form eines CCD oder CMOS auf, dessen Ausgangssignal mittels eines Analog-Digital-Wandlers 64 digitalisiert und einer Videoschnittstelle 66 zugeführt wird. Die Bilddaten von der Kamera 42 können nur aus Luminanzdaten (Grauwerte, Helligkeit) bestehen oder auch Chrominanzdaten (Farbe) enthalten. Ein Prozessor 68 (in der Regel Mikroprozessor oder -controller) kommuniziert bidirektional mit der Videoschnittstelle 66. Auf einer mit dem Prozessor 68 verbundenen Anzeigeeinrichtung 70 kann das vom Objektiv 82 der Kamera 42 auf dem Bildsensor 62 erzeugte Bild dem Bediener in der Fahrerkabine 18 angezeigt werden. Die Anzeigeeinrichtung 70 kann auch andere Informationen, beispielsweise Betriebsdaten des Lenksystems 60 und/oder des Feldhäckslers 10 bzw. Traktors 50 wiedergeben. Dem Bediener steht auch eine Tastatur 72 oder andere Eingabeeinrichtung (z. B. Maus, Joystick, Spracheingabe) zur Verfügung, mit der er Eingaben an den Prozessor 68 durchführen kann. Der Prozessor 68 steuert elektromagnetische Ventile 74, die eingangsseitig mit einer Quelle 76 unter Druck stehenden Hydraulikfluids und ausgangsseitig mit einem Lenkzylinder 78 in Verbindung stehen. Der Lenkzylinder 78 verstellt bei dem Feldhäcksler 10 aus Figur 1 die rückwärtigen Räder 16 und bei dem Traktor 50 aus Figur 2 die vorderen Räder 52. Ein Radwinkelsensor 80 erfasst den aktuellen Lenkwinkel der Räder 16 bzw. 52 und führt diese Information dem Prozessor 68 zu. Der hardwaremäßige Aufbau derartiger selbsttätiger Lenksysteme 60 ist im Stand der Technik hinreichend bekannt, so dass hier auf eine eingehendere Beschreibung verzichtet und auf den in der Beschreibungseinleitung erwähnten Stand der Technik verwiesen werden kann, dessen Offenbarung durch Verweis mit in die vorliegenden Unterlagen aufgenommen wird.

Die Aufgabe des selbsttätigen Lenksystems 60 besteht darin, den Feldhäcksler 10 oder den Traktor 50 mit der Ballenpresse 56 ohne Lenkeinwirkung des Bedieners entlang des Schwads 48 über das Feld zu führen. Der Prozessor 68 verarbeitet dazu die Bilder der Kamera 42 durch elektronische Bildverarbeitung und erzeugt anhand deren Ergebnis geeignete Steuersignale für die elektromagnetischen Ventile 74.

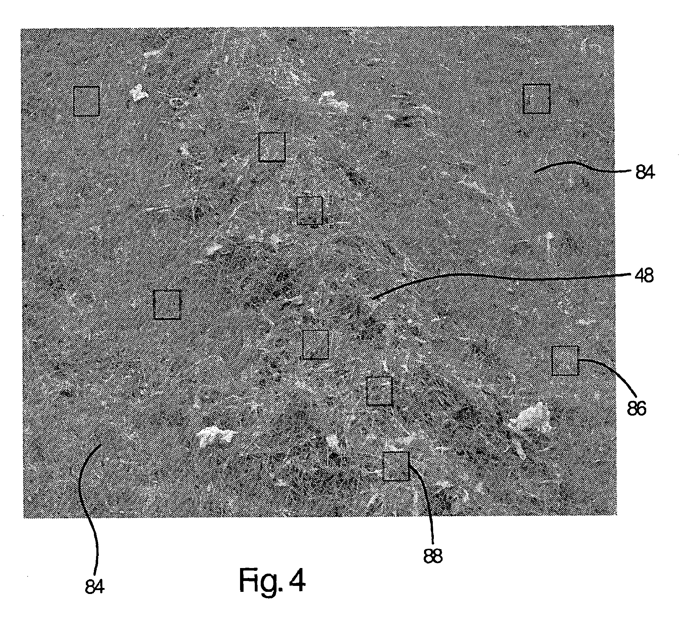

Das Schwad 48 besteht in der Regel aus getrocknetem Halmgut, das mit einer Mähmaschine abgeschnitten, auf dem Feld zum Trocknen liegen gelassen und durch Schwader zusammengeführt oder beim Abernten eines Getreidefelds durch den Mähdrescher in der Schwadform abgelegt wurde. Ein typisches, bei der Grasernte von der Kamera 42 erfasstes Bild ist in der Figur 4 wiedergegeben. Man erkennt, dass sich die Helligkeitswerte zwischen dem Schwad 48 und den Bereichen des Felds 84 seitlich neben dem Schwad 48 nicht sehr stark unterscheiden. Es wäre somit problematisch oder fast unmöglich, ein Lenksignal zu erzeugen, indem man die einzelnen Bildpunkte (im Folgenden: Pixel) des Bildsignals der Kamera 42 ausschließlich anhand ihrer Helligkeit dem Schwad 48 bzw. dem Feld 84 zuordnet. Ein Chrominanzdaten enthaltendes Bild könnte dann besser zur Unterscheidung zwischen Schwad 48 und Feld 84 anhand der Farben geeignet sein, wenn das Halmgut sich farblich hinreichend vom Feld unterscheidet. Das ist aber insbesondere dann nicht der Fall, wenn auch die auf dem Feld stehen gebliebenen Halme zumindest teilweise getrocknet sind, oder wenn das Schwad gleich nach dem Mähen aufgenommen werden soll, wie bei der Getreideernte.

Anhand der Figur 4 ist aber auch erkennbar, dass auf dem Feld 84 im Wesentlichen nur vertikal stehende Halme (Grasstoppeln) vorhanden sind, während das Schwad 48 demgegenüber längere und in unterschiedlichen, zu einem gewissen Teil horizontal verlaufenden Orientierungen liegende Halme umfasst. Die vorliegende Erfindung schlägt daher vor, die Textur der Pixel zu evaluieren und zur Entscheidung, ob sich ein Pixel auf dem Feld 84 oder im Schwad 48 befindet, heranzuziehen. Unter Textur ist die lokale Verteilung und Variation der Grauwerte (und/oder Chrominanzwerte) in einem Teilbereich des Bildes zu verstehen. Auf dem Feld besteht die Textur aus kurzen, meist vertikal verlaufenden Strukturen (Halmen), während sie im Schwad aus längeren Halmen besteht, die in unterschiedlichen Richtungen vorliegen.

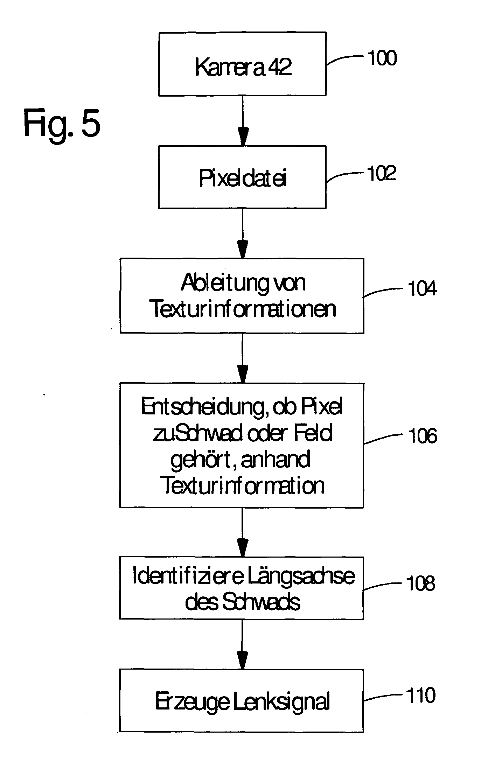

Dementsprechend arbeitet der Prozessor 68 nach einer Prozedur, wie sie in der Figur 5 dargestellt ist. Ausgehend von einem im Schritt 100 aufgenommenen Bild der Kamera 42, wird im Schritt 102 über die Videoschnittstelle 66 dem Prozessor 68 eine Pixeldatei zur Verfügung gestellt. Aus dieser Pixeldatei wird im Schritt 104 für die weiterzuverarbeitenden Pixel jeweils eine Texturinformation abgeleitet. Im Schritt 104 können alle eingehenden Pixel oder nur ein Teil von ihnen, die einen das Schwad 48 enthaltenden Bereich des Bildes enthalten, verarbeitet werden, um die Rechenzeit zu verkürzen.

Die Ableitung der Texturinformation im Schritt 104 kann auf verschiedene Arten erfolgen. Es besteht die Möglichkeit, eine Grauwertabhängigkeitsanalyse durchzuführen, bei der eine Abhängigkeitsmatrix berechnet wird. Die Abhängigkeitsmatrix enthält für kleine Bildbereiche eine Information, welche Kombinationen benachbarter Grauwerte in einer Nachbarschaft der Pixel auftreten. Sind die Grauwerte in der Nachbarschaft des Pixels homogen, weist die Abhängigkeitsmatrix somit darauf hin, dass nur identische Grauwerte vorliegen. Variieren die Grauwerte in der Nachbarschaft hingegen sehr stark, ergibt sich eine andere Abhängigkeitsmatrix. In einer bevorzugten Ausführungsform werden bei der Grauwertanalyse nur die direkten acht Nachbarn der Pixel betrachtet, am Rand des ausgewerteten Bildbereichs reduziert sich ihre Anzahl auf drei (in den Ecken) oder fünf. Man erhält auf diese Weise eine Information, ob die Textur in der Nachbarschaft des Pixels gleichmäßig ist oder nicht.

Die Ableitung der Texturinformation in Schritt 104 kann auch durch eine richtungsabhängige Grauwertabhängigkeitsanalyse erfolgen. Wie anhand der Figur 4 erkennbar ist und bereits oben erwähnt wurde, enthält das Feld 84 sehr viele vertikale Linienstrukturen. Im Schwad 48 liegen hingegen die Halme wild durcheinander. Es bietet sich daher an, die diagonalen Nachbarn der Pixel unberücksichtigt zu lassen und nur die Pixel unter- und oberhalb sowie links und rechts des betrachteten Pixels zur Erstellung einer Abhängigkeitsmatrix heranzuziehen. Die im Schritt 104 auf diese Weise abgeleitete Texturinformation enthält somit Informationen, ob die Textur in der Nähe des Pixels vertikale oder horizontale Strukturen enthält. Die Informationsmenge, jedoch nicht unbedingt der Informationsgehalt, ist gegenüber der nicht-richtungsabhängigen Grauwertabhängigkeitsanalyse reduziert.

Weiterhin kann die Texturinformation in Schritt 104 auch durch eine Farbanalyse erzeugt werden. Bei dieser Untersuchung wird die Chrominanzinformation des Schwads 48 analysiert. Wird eine farbig arbeitende Kamera 42 verwendet, besitzt jedes Pixel des generierten Farbbilds drei Farbinformationen, jeweils für Rot, Grün und Blau. Ist das Schwad 48 also farblich vom Feld 84 verschieden, kann anhand der Farbinformation einfach zwischen den beiden, auch bei gleicher Helligkeit, unterschieden werden.
Schließlich besteht auch die Möglichkeit, die Grauwertabhängigkeitsanalyse oder die richtungsabhängige Grauwertabhängigkeitsanalyse mit der Farbanalyse zu kombinieren. Es wird also für jedes auszuwertende Pixel eine richtungsunabhängige oder richtungsabhängige Abhängigkeitsmatrix für die Grauwerte und eine Farbinformation erzeugt, die gemeinsam weiterverarbeitet werden. Bei den genannten Analysen kommt insbesondere die so genannte Second Order Statistik zum Einsatz. Außerdem ist eine serielle Kombination möglich, bei der zunächst eine reine RGB-Analyse durchgeführt, und anschließend das Ergebnis der RGB-Analyse einer Texturanalyse unterworfen wird.

Nachdem im Schritt 104 eine Information über die Textur in der Umgebung der Pixel gewonnen wurde, folgt gemäß der Figur 5 der Schritt 106. Dort wird anhand der im Schritt 104 bereitgestellten Texturinformation eine Klassifikation durchgeführt, d. h. für jedes zu verarbeitende Pixel oder Pixelgruppe entschieden, ob es zum Schwad oder zum Feld gehört. Hier können beliebige, geeignete Algorithmen verwendet werden. Als besonders vorteilhaft hat sich die Verwendung eines neuronalen Netzwerks erwiesen, da es sich wegen seiner Lernfähigkeit auch geänderten Bildaufnahmebedingungen anpassen kann. Denkbar wäre auch die Verwendung einer Fuzzy-Logik oder Neuro-Fuzzy-Logik. Diese Entscheidung erfolgt in zwei Stufen: zunächst wird für jedes Pixel bzw. jede Pixelgruppe ein Wahrscheinlichkeitswert evaluiert, der die Wahrscheinlichkeit wiedergibt, mit der es bzw. sie zum Schwad gehört. Anschließend wird geprüft, ob der jeweilige Wahrscheinlichkeitswert über einem Schwellenwert (in der Regel 50 %) liegt oder nicht.

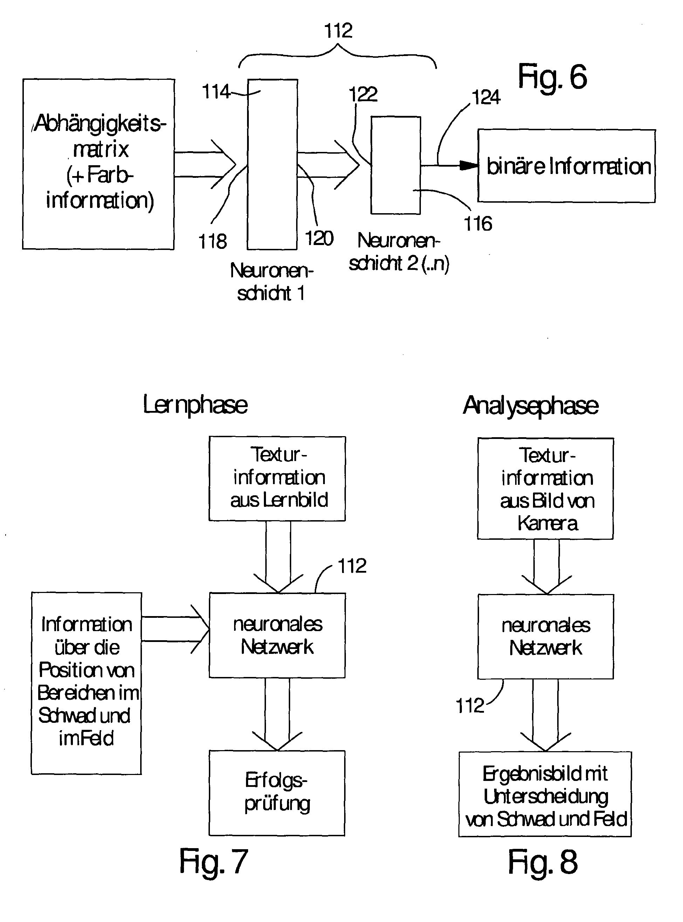

Eine mögliche Ausführungsform eines derartigen neuronalen Netzwerks 112 ist in der Figur 6 schematisch dargestellt. Das Netzwerk 112 setzt sich aus mindestens zwei Neuronenschichten 114, 116 zusammen. Die erste Neuronenschicht 114 hat einen Eingang 118, dem die im Schritt 104 gewonnene Texturinformation in Form der Abhängigkeitsmatrix und ggf. der Farbinformation zugeführt wird. In der Neuronenschicht 114 erfolgt eine Verknüpfung der Eingangswerte mit erlernbarer Information, deren Ergebnis an einem Ausgang 120 der ersten Neuronenschicht 114 bereitsteht und dem Eingang 122 der zweiten Neuronenschicht 116 zugeführt wird.

Wie dargestellt, stellt die erste Neuronenschicht 114 der zweiten Neuronenschicht 116 mehrere Ausgangssignale parallel zur Verfügung. Die zweite Neuronenschicht 116 hat einen einzigen Ausgang 124. Auch in der zweiten Neuronenschicht 116 erfolgt eine Verknüpfung der an seinem Eingang 122 vorliegenden Signale mit erlernbarer Information. Am Ausgang der zweiten Neuronenschicht 116 wird schließlich eine zu binärisierende Information darüber bereitgestellt, ob das untersuchte Pixel oder Pixelgruppe zum Schwad 48 oder zum Feld 84 gehört. Das Netzwerk 112 könnte auch weitere Neuronenschichten zwischen den beiden dargestellten Neuronenschichten 114, 116 umfassen. Es kann auch eine beliebige andere Netzwerkarchitektur als die des dargestellten, so genannten Backpropagation-Netzwerks verwendet werden.

Für jedes zu untersuchende Pixel könnte ein eigenes neuronales Netzwerk 112 bereitgestellt werden, oder es wird ein einziges Netzwerk 112 verwendet, dem die Eingangsdaten für alle Pixel nacheinander zugeführt werden. In der Regel wird das neuronale Netzwerk 112 softwaremäßig durch den Prozessor 68 verwirklicht. In anderen Ausführungsformen könnte es jedoch auch durch spezielle Hardware realisiert werden.

Wie bereits erwähnt, ist das neuronale Netzwerk 112 lernfähig. Ihm wird somit zunächst gelehrt, welche Teile eines aufgenommenen Bildes zum Schwad 48 und welche zum Feld 84 gehören. Dieser Vorgang ist in der Figur 7 schematisch dargestellt. Dem neuronalen Netzwerk wird (anstelle einer aus einem Bild, das von der Kamera 42 aufgenommen wurde, abgeleiteten Texturinformation) die aus einem Lernbild generierte Texturinformation zugeführt, die beispielsweise elektronisch eingespeichert werden kann, oder der Feldhäcksler 10 bzw. Traktor 50 wird auf dem Feld 84 vor einem Schwad 48 positioniert und das Schwad 48 wird mit der Kamera 42 aufgenommen. Weiterhin wird dem neuronalen Netzwerk 112 eine Information über die Position von Bereichen des Schwads 48 und des Felds 84 in dem jeweiligen Bild zugeführt. Es kann sich um Rechtecke 86, 88 handeln, wie sie in der Figur 4 dargestellt sind. Es werden somit Masken definiert, in deren Innenraum zum Feld 84 bzw. zum Schwad 48 gehörende Pixelmengen enthalten sind. Das neuronale Netzwerk 112 ist anhand dieser Informationen in der Lage, zu erlernen, wie das Schwad 48 und das Feld 84 aussehen und sie zu unterscheiden. Dieser Lernvorgang könnte auch erfolgen, indem der Fahrer den Feldhäcksler 10 oder den Traktor 50 von Hand entlang eines Schwads 48 steuert. Das neuronale Netzwerk 112 lernt dabei ebenfalls, zwischen Schwad 48 und Feld 84 zu unterscheiden. Das neuronale Netzwerk 112 liefert ein Ergebnisbild, das zur Erfolgsprüfung dient. Es kann auf der Anzeigeeinrichtung 70 wiedergegeben werden und den Bediener darüber informieren, ob die Arbeitsbedingungen für das selbsttätige Lenksystem 60 hinreichend sind oder ob, beispielsweise bei Dunkelheit oder Nebel, besser auf eine manuelle Lenkung zurückgegriffen werden sollte. Die Lernphase des neuronalen Netzwerks 112 kann wiederholt auf eine entsprechende Bedienerangabe hin wiederholt bzw. verlängert werden, oder anders als zuvor beschrieben, einmalig bereits bei der Herstellung des Lenksystems 60 erfolgen bzw. es können für geänderte Bedingungen auswählbare Speicherwerte oder austauschbare Speicherkarten vorgesehen werden.

Nachdem die Lernphase (Figur 7) abgeschlossen ist, arbeitet das neuronale Netzwerk 112 gemäß der Figur 8. Ihm wird die aus Bildern von der Kamera 42 abgeleitete Texturinformation zugeführt und es liefert ein Pixelbild, in dem eine binäre Unterscheidung von Schwad und Feld erfolgt. Durch die Beaufschlagung des neuronalen Netzes 112 mit der Texturinformation ist die Unterscheidung zwischen Schwad 48 und Feld 84 erleichtert und auch bei ungünstigen Sichtbedingungen ermöglicht.

Es wird nun wieder auf die Figur 5 Bezug genommen, in der nach dem Schritt 106 nunmehr eine binäre Pixeldatei vorliegt. Die einzelnen Pixel sind entweder dem Feld 84 oder dem Schwad 48 zugeordnet. Anhand dieser Pixeldatei wird im folgenden Schritt 108 die Längsachse des Schwads 48 bestimmt, d. h. es wird ihre Richtung (Winkel zur Längsmittelachse des Feldhäckslers 10 bzw. Traktors 50) und ihre Entfernung von der Längsmittelachse des Feldhäckslers 10 bzw. Traktors 50 bestimmt. Anhand der Richtung und der Entfernung wird dann im Schritt 110 ein Lenksignal erzeugt, das den elektromagnetischen Ventilen 74 zugeführt wird. Der Feldhäcksler 10 bzw. Traktor 50 fährt somit selbsttätig entlang des Schwads 48. Die in der Figur 5 dargestellte Prozedur wird regelmäßig wiederholt, beispielsweise 25 mal in einer Sekunde. Es können auch höhere oder niedrigere Wiederholungsfrequenzen verwendet werden. Am Ende des Schwads lenkt der Bediener die Erntemaschine manuell zum nächsten aufzunehmenden Schwad. In einer anderen Ausführungsform wird auch das nächste Schwad durch das selbsttätige Lenksystem 60 erkannt und die Erntemaschine automatisch dorthin gelenkt.

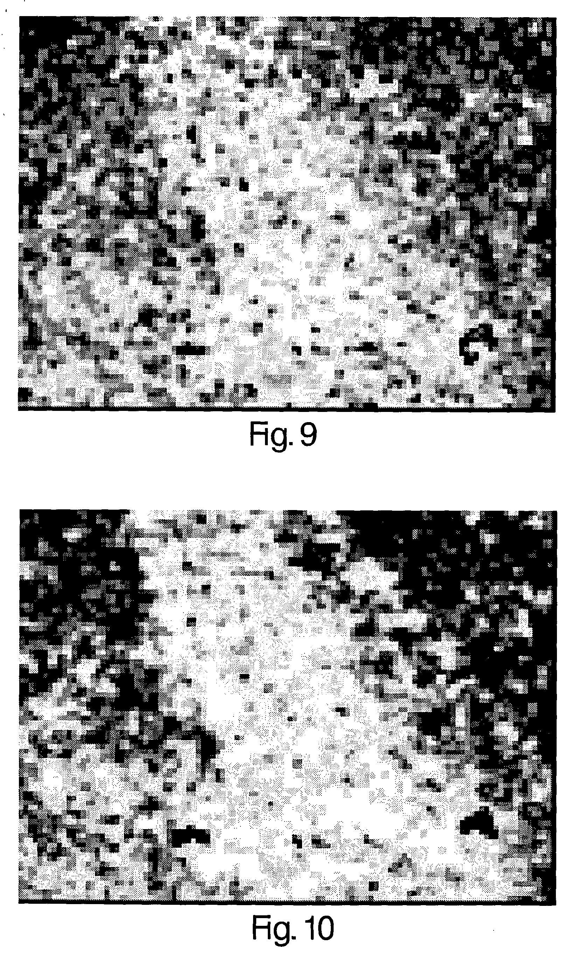

Die Figuren 9 bis 15 zeigen zur Veranschaulichung Bilder, die während der in Figur 5 dargestellten Verarbeitung aus dem in der Figur 4 dargestellten Bild hervorgehen.

Die Figur 9 zeigt ein Ergebnis nach einer richtungsunabhängigen Grauwertabhängigkeitsanalyse. Die Figur 10 zeigt ein Ergebnis nach einer richtungsabhängigen Grauwertabhängigkeitsanalyse. In beiden Figuren sind die vom neuronalen Netzwerks berechneten Wahrscheinlichkeitswerte dafür dargestellt, dass das Pixel zum Schwad gehört, bevor sie binarisiert wurden. Ein Vergleich der Figuren 9 und 10, die beide quasi das Ergebnis des Schritts 106 der Figur 5 vor der Klassifikation darstellen, zeigt den positiven Einfluss der richtungsabhängigen Grauwertabhängigkeitsanalyse.

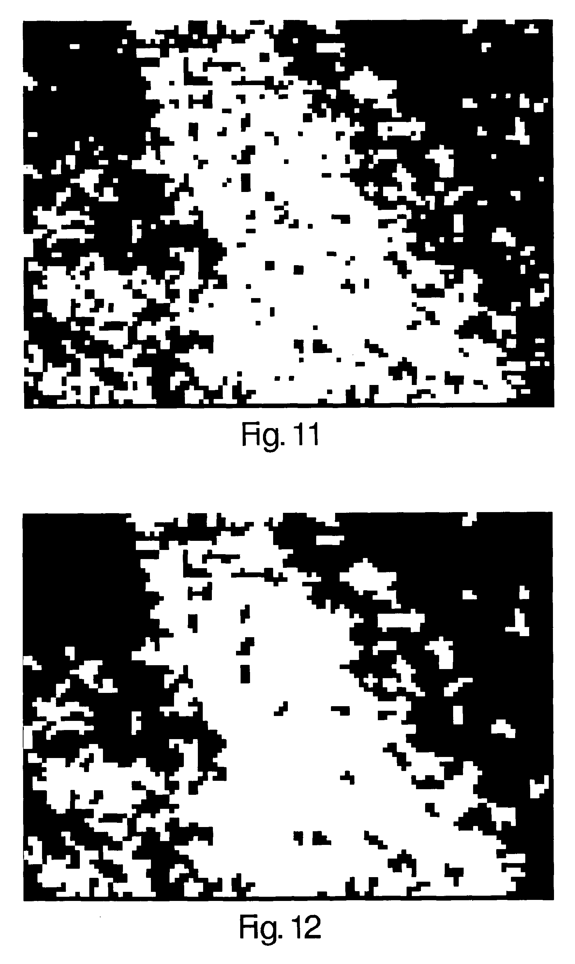

Für die weitere Verarbeitung werden daher nur noch die Ergebnisse der richtungsabhängigen Grauwertabhängigkeitsanalyse verwendet. Die Figur 11 stellt das Ergebnis der Entscheidung (Schritt 106 in Figur 5) dar, ob die Pixel zum Schwad 48 (weiß) oder zum Feld 84 (schwarz) gehören, d. h. die Binarisierung durch das neuronale Netzwerk 112. Das neuronale Netzwerk 112 wurde zuvor einer Lernphase unterzogen (Figur 7), bei dem ihm das Bild aus Figur 4 als Lernbild und die Rechtecke 86, 88 als zum Feld 84 bzw. Schwad 48 gehörende Flächen mitgeteilt wurden. Dieses Netzwerk zeigte auch bei anderen Bildern gute Ergebnisse.

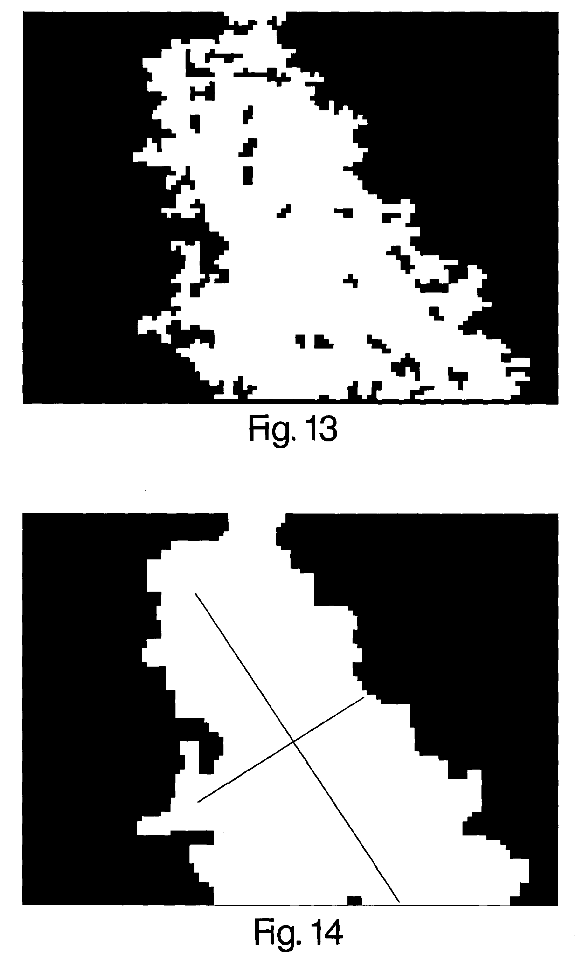

Die Figuren 12 bis 14 entsprechen Verfahrensschritten des Schritts 108 der Figur 5. Bei der Figur 12 wurden alle zusammenhängenden Flächen berechnet und alle Flächen entfernt, die kleiner als ein Schwellenwert sind (hier 450 Pixel). Bei Figur 13 ist nur die größte Fläche aus der Figur 12 übrig gelassen worden, bei der danach in Figur 14 durch Anwendung von Dilatation und Erosion die kleinen schwarzen Störflächen entfernt wurden. In der Figur 14 sind außerdem die zwei Trägheitsachsen der verbleibenden Fläche des Schwads 48 eingezeichnet. Anhand der sich in Längsrichtung erstreckenden Trägheitsachse sind die Richtung des Schwads 48 und sein Abstand von der Längsmittelebene des Feldhäckslers 10 bzw. Traktors 50 bestimmbar. Diese Größen werden zur Erzeugung eines Lenksignals für die elektromagnetischen Ventile 74 herangezogen, wobei der aktuelle Wert des Radwinkelsensors 80 berücksichtigt wird.

## Patentansprüche

1. Verfahren zum selbsttätigen Lenken einer landwirtschaftlichen Maschine auf einem Feld (84) entlang einer zu bearbeitenden Fläche, mit folgenden Schritten:
- Aufnahme eines vor der Maschine liegenden Bereichs des Felds (84) einschließlich der zu bearbeitenden Fläche mit einer abbildenden Kamera (42),
- Erzeugung einer Pixeldatei aus einem Bildsignal der Kamera (42),
- Erzeugen einer Texturinformation bezüglich der Textur der Umgebung der Pixel der Pixeldatei,
- Klassifizieren von Pixeln der Pixeldatei unter Berücksichtigung der Texturinformation, um eine binäre Information zu erzeugen, ob das jeweilige Pixel der zu bearbeitenden Fläche zuzuordnen ist oder nicht,
- Erzeugen eines Lenksignals basierend auf den Ergebnissen der Klassifikation, und
- Verstellen von Lenkmitteln der Erntemaschine gemäß dem Lenksignal, so dass die Maschine selbsttätig entlang der zu bearbeitenden Fläche gelenkt wird.

2. Verfahren nach Anspruch 1, **dadurch gekennzeichnet, dass** die Texturinformation durch eine richtungsunabhängige oder richtungsabhängige Texturanalyse, insbesondere eine Grauwertabhängigkeitsanalyse und/oder eine Multispektralanalyse gewonnen wird.

3. Verfahren nach Anspruch 1 oder 2, **dadurch gekennzeichnet, dass** die Klassifikation, ob die einzelnen Pixel der Pixeldatei jeweils der zu bearbeitenden Fläche zuzuordnen sind oder nicht, mittels eines neuronalen Netzwerks (112) durchgeführt wird.

4. Verfahren nach einem der Ansprüche 1 bis 3, **dadurch gekennzeichnet, dass** die Mittel zur Klassifikation vor Arbeitsbeginn mittels eines ihnen zugeführten Bildes und einer Information über Bereiche (88) des Bildes, die eine zu bearbeitende Fläche zeigen, und Bereiche (86), die keine zu bearbeitende Fläche zeigen, einem Lernvorgang unterzogen werden.

5. Verfahren nach einem der vorhergehenden Ansprüche, **dadurch gekennzeichnet, dass** die zu bearbeitende Fläche durch aufzunehmendes Erntegut, insbesondere ein Schwad (48), oder durch einen mit einer Bodenbearbeitungs- und/oder Sämaschine zu bearbeitenden Boden gebildet wird.

6. Selbsttätiges Lenksystem (60) zum selbsttätigen Lenken einer landwirtschaftlichen Erntemaschine auf einem Feld (84) entlang einer zu bearbeitenden Fläche, mit einer abbildenden Kamera (42) zur Aufnahme eines vor der Erntemaschine liegenden Bereichs des Felds (84) einschließlich der zu bearbeitenden Fläche, einer Verarbeitungseinrichtung, insbesondere einem Prozessor (68), der eine aus einem Bildsignal der Kamera (42) erzeugte Pixeldatei zugeführt wird, wobei die Verarbeitungseinrichtung betreibbar ist, eine Texturinformation bezüglich der Textur der Umgebung der Pixel der Pixeldatei zu erzeugen, eine Klassifikation von Pixeln der Pixeldatei unter Berücksichtigung der Texturinformation durchzuführen, um eine binäre Information zu erzeugen, ob das jeweilige Pixel der zu bearbeitenden Fläche zuzuordnen ist oder nicht, und basierend auf den Ergebnissen der Klassifikation ein Lenksignal zu erzeugen, das Lenkmitteln der Erntemaschine zugeführt wird, so dass die Maschine selbsttätig entlang der zu bearbeitenden Fläche lenkbar ist.

7. Lenksystem (60) nach Anspruch 6, **dadurch gekennzeichnet, dass** die Texturinformation durch eine richtungsunabhängige oder richtungsabhängige Texturanalyse, insbesondere eine Grauwertabhängigkeitsanalyse und/oder eine Spektralanalyse gewonnen wird.

8. Lenksystem (60) nach Anspruch 6 oder 7, **dadurch gekennzeichnet, dass** die Klassifikation, ob die einzelnen Pixel der Pixeldatei jeweils aufzunehmendem Erntegut zuzuordnen sind oder nicht, mittels eines neuronalen Netzwerks (112) getroffen wird.

9. Lenksystem (60) nach einem der Ansprüche 6 bis 8, **dadurch gekennzeichnet, dass** die die Klassifikation durchführende Verarbeitungseinrichtung vor Arbeitsbeginn mittels eines ihnen zugeführten Bildes und einer Information über Bereiche (88) des Bildes, die eine zu bearbeitende Fläche zeigen, und Bereiche (86), die keine zu bearbeitende Fläche zeigen, einem Lernvorgang unterzogen wird.

10. Erntemaschine mit Mitteln zur Aufnahme von Erntegut von einem Feld, insbesondere aus einem Schwad (48), und einem Lenksystem (60) nach einem der Ansprüche 6 bis 9.

11. Maschine zur Bodenbearbeitung und/oder zum Säen mit einem Lenksystem (60) nach einem der Ansprüche 6 bis 9.

## Claims

1. Method for automatically steering an agricultural machine on a field (84) along a surface which is to be worked, having the following steps:
- recording of a region of the field (84) in front of the machine, including the area to be worked, with an imaging camera (42),
- generation of a pixel file from an image signal from the camera (42),
- generation of texture information relating to the texture of the surroundings of the pixel of the pixel file,
- classification of pixels of the pixel file taking into account the texture information, in order to generate binary information indicating whether or not the respective pixel is to be assigned to the area to be worked,
- generation of a steering signal on the basis of the results of the classification, and
- adjustment of steering means of the harvesting machine in accordance with the steering signal, with the result that the machine is automatically steered along the area to be worked.

2. Method according to Claim 1, **characterized in that** the texture information is acquired by a direction-independent or direction-dependent texture analysis, in particular a grey-scale-dependency analysis and/or a multi-spectral analysis.

3. Method according to Claim 1 or 2, **characterized in that** the classification as to whether or not the individual pixels of the pixel file are to be respectively assigned to the area to be worked is carried out by means of a neural network (112).

4. Method according to one of Claims 1 to 3, **characterized in that** the classification means are subjected to a learning process before the start of the work, by means of an image fed to them and information about regions (88) of the image which show an area to be worked and regions (86) which do not show an area to be worked.

5. Method according to one of the preceding claims, **characterized in that** the area to be worked is formed of harvested material to be picked up, in particular a swathe (48), or of a piece of ground to be worked with a soil-working and/or sowing machine.

6. Automatic steering system (60) for automatically steering an agricultural harvesting machine on a field (84) along an area to be worked, having an imaging camera (42) for recording a region of the field (84) located in front of the harvesting machine, including the area to be worked, a processing device, in particular a processor (68), to which a pixel file which is generated from an image signal from the camera (42) is fed, wherein the processing device can be operated so as to generate texture information relating to the texture of the surroundings of the pixel of the pixel file, so as to carry out a classification of pixels of the pixel file taking into account the texture information, so as to generate binary information indicating whether or not the respective pixel is to be assigned to the area to be worked, and to generate a steering signal on the basis of the results of the classification, which steering signal is fed to steering means of the harvesting machine, with the result that the machine can be automatically steered along the area to be worked.

7. Steering system (60) according to Claim 6, **characterized in that** the texture information is acquired by a direction-independent or direction-dependent texture analysis, in particular a grey-scale-dependency analysis and/or a spectral analysis.

8. Steering system (60) according to Claim 6 or 7, **characterized in that** the classification as to whether or not the individual pixels of the pixel file are to be respectively assigned to harvested material which is to be picked up is made by means of a neural network (112).

9. Steering system (60) according to one of Claims 6 to 8, **characterized in that** the processing device which carries out the classification is subjected to a learning process before the start of the work, by means of an image fed to it and information about regions (88) of the image which show an area to be worked and regions (86) which do not show an area which is to be worked.

10. Harvesting machine having means for picking up harvested material from a field, in particular from a swath (48), and a steering system (60) according to one of Claims 6 to 9.

11. Machine for soil cultivation and/or for sowing, having a steering system (60) according to one of Claims 6 to 9.

## Revendications

1. Procédé de guidage automatique d'une machine agricole sur un champ (84) le long d'une surface à traiter, comprenant les étapes suivantes :
- enregistrement d'une zone du champ (84) qui se trouve à l'avant de la machine, y compris la surface à traiter, avec une caméra (42) d'imagerie,
- génération d'un fichier de pixels à partir d'un signal d'image de la caméra (42),
- génération d'une information de texture concernant la texture de l'environnement des pixels du fichier de pixels,
- classification des pixels du fichier de pixels en tenant compte de l'information de texture afin de générer une information binaire indiquant si le pixel correspondant doit être associé ou non à la surface à traiter,
- génération d'un signal de guidage en se basant sur les résultats de la classification, et
- positionnement de moyens de direction de la moissonneuse conformément au signal de guidage de sorte que la machine soit guidée automatiquement le long de la surface à traiter.

2. Procédé selon la revendication 1, **caractérisé en ce que** l'information de texture est obtenue par une analyse de la texture indépendante de la direction ou dépendante de la direction, notamment une analyse de dépendance du niveau de gris et/ou une analyse multispectrale.

3. Procédé selon la revendication 1 ou 2, **caractérisé en ce que** la classification indiquant si les pixels individuels du fichier de pixels doivent respectivement être associés ou non à la surface à traiter est effectuée au moyen d'un réseau neuronal (112).

4. Procédé selon l'une des revendications 1 à 3, **caractérisé en ce que** les moyens de classification sont soumis avant le début du travail à un processus d'apprentissage au moyen d'une image qui leur est acheminée et d'une information sur les zones (88) de l'image qui représentent une surface à traiter et les zones (86) qui ne représentent pas une surface à traiter.

5. Procédé selon l'une des revendications précédentes, **caractérisé en ce que** la surface à traiter est formée par un produit moissonné à ramasser, notamment un andain (48), ou par un sol à traiter avec une machine de traitement du sol et/ou une semeuse.

6. Système de guidage automatique (60) pour le guidage automatique d'une machine agricole sur un champ (84) le long d'une surface à traiter, comprenant une caméra (42) d'imagerie pour enregistrer une zone du champ (84) qui se trouve à l'avant de la moissonneuse, y compris la surface à traiter, un dispositif de conditionnement, notamment un processeur (68), auquel est acheminé un fichier de pixels généré à partir d'un signal d'image de la caméra (42), le dispositif de conditionnement pouvant être utilisé pour générer une information de texture concernant la texture de l'environnement des pixels du fichier de pixels, pour effectuer une classification des pixels du fichier de pixels en tenant compte de l'information de texture afin de générer une information binaire indiquant si le pixel correspondant doit être associé ou non à la surface à traiter, et, en se basant sur les résultats de la classification, pour générer un signal de guidage qui est acheminé à des moyens de direction de la moissonneuse de sorte que la machine puisse être guidée automatiquement le long de la surface à traiter.

7. Système de guidage (60) selon la revendication 6, **caractérisé en ce que** l'information de texture est obtenue par une analyse de la texture indépendante de la direction ou dépendante de la direction, notamment une analyse de dépendance du niveau de gris et/ou une analyse spectrale.

8. Système de guidage (60) selon la revendication 6 ou 7, **caractérisé en ce que** la classification indiquant si les pixels individuels du fichier de pixels doivent respectivement être associés ou non au produit moissonné à ramasser est effectuée au moyen d'un réseau neuronal (112).

9. Système de guidage (60) selon l'une des revendications 6 à 8, **caractérisé en ce que** le dispositif de conditionnement qui effectue la classification est soumis avant le début du travail à un processus d'apprentissage au moyen d'une image qui lui est acheminée et d'une information sur les zones (88) de l'image qui représentent une surface à traiter et les zones (86) qui ne représentent pas une surface à traiter.

10. Moissonneuse équipée de moyens pour ramasser un produit moissonné sur un champ, notamment depuis un andain (48), et d'un système de guidage (60) selon l'une des revendications 6 à 9.

11. Machine de traitement du sol et/ou d'ensemencement équipée d'un système de guidage (60) selon l'une des revendications 6 à 9.
